# FASCICULE DE BREVET EUROPEEN

(11) **EP 2 162 476 B1**
(45) Date de publication et mention de la délivrance du brevet: **03.08.2011**
(21) Numéro de dépôt: 08762876.4
(22) Date de dépôt: 28.05.2008
(51) Int. Cl.: C08F 220/32, D21H 17/36, D21H 17/37, D21H 17/38, D21H 17/39, D21H 19/24

(54) **PROCÉDÉ DE FABRICATION D'UNE FORMULATION AQUEUSE À BASE DE SOLUTION D'UN POLYMÈRE PEIGNE ACRYLIQUE ET D'ÉMULSION ÉPAISSISSANTE ACRYLIQUE, FORMULATION OBTENUE ET SES UTILISATIONS DANS LE COUCHAGE PAPETIER**
VERFAHREN ZUR HERSTELLUNG EINER WÄSSRIGEN FORMULIERUNG, DIE EINE ACRYLKAMMPOLYMERLÖSUNG UND EINE ACRYLVERDICKEREMULSION ENTHÄLT, SO ERHALTENE FORMULIERUNG UND VERWENDUNG DAVON BEI DER PAPIERBESCHICHTUNG
METHOD FOR PREPARING AN AQUEOUS FORMULATION CONTAINING AN ACRYLIC COMB POLYMER SOLUTION AND AN ACRYLIC THICKENING EMULSION, FORMULATION THUS OBTAINED AND USE THEREOF IN PAPER COATING

(30) Priorité: 08.06.2007 FR 0704092
(43) Date de publication de la demande: 17.03.2010
(73) Titulaire: COATEX S.A.S., 69730 Genay (FR)
(72) Inventeur: DUPONT, François, F-69004 Lyon (FR); SUAU, Jean-Marc, F-69480 Lucenay (FR)
(74) Mandataire: Richebourg, Michel François
(86) Numéro de dépôt international: PCT/IB2008/001545
(87) Numéro de publication internationale: WO 2008/149226

(56) Documents cités:
- WO-A-2004/041883
- WO-A-2004/044022
- US-A- 4 780 500
- US-A1- 2002 156 179

## Description

La présente invention concerne le domaine du papier, et plus précisément les compositions qui permettent de coucher la surface du papier, encore dénommées sauces de couchage.

Dans le cadre de la fabrication de la feuille de papier par couchage, on dépose sur la surface du papier support une composition aqueuse dénommée "sauce de couchage" qui contient notamment de l'eau, une ou plusieurs charges minérales, un ou plusieurs liants ainsi que divers additifs.

Une première caractéristique importante d'une sauce de couchage réside dans son comportement rhéologique : il est en effet intéressant de disposer de sauces de couchage dont on peut réguler et notamment augmenter la viscosité sur de larges plages de valeurs, en vue de se conformer aux exigences de l'utilisateur final et aux paramètres du procédé de couchage. A ce titre, on met en oeuvre dans lesdites sauces des agents connus sous le nom "d'épaississants".

Depuis de nombreuses années, l'homme du métier connaît la catégorie particulière des épaississants acryliques, constitués des homopolymères et des copolymères de l'acide (méth)acrylique avec d'autres monomères, et notamment des épaississants acryliques de type ASE (Alkali Swellable Emulsion ou émulsion alcali soluble) et HASE (Hydrophobically modified Allcali Swellable Emulsion ou émulsion alcali soluble et modifiée hydrophobiquement). Les premiers désignent des épaississants en émulsion qui sont des homopolymères ou des copolymères de l'acide (méth)acrylique avec un ester de ces acides, et les seconds désignent des épaississants en émulsion qui sont des copolymères à base d'acide (méth)acrylique, d'un ester de ces acides et d'un monomère hydrophobe.

Parallèlement à cet aspect rhéologique s'inscrit une deuxième propriété fondamentale des sauces de couchage : leur rétention d'eau. Après dépôt sur le papier support, cette sauce possède une tendance naturelle à transférer dans le support, tout ou partie de l'eau et des substances hydrosolubles qu'elle contient. On cherche alors à réduire au maximum cette migration de l'eau et des substances hydrosolubles, en vue d'éviter une évolution de la rhéologie de la sauce de couchage non utilisée et recyclée dans le procédé de couchage. On parle alors de phénomène de rétention d'eau qu'on cherche à améliorer, c'est-à-dire à augmenter. A cet effet, on utilise des agents "rétenteurs d'eau", qui sont classiquement de l'amidon, de l'alcool polyvinylique, des polymères à base de carboxyméthylcellulose, ainsi que des latex ou des émulsions de polymères hautement carboxylés, ou encore des polycarboxylates tels que des polyacrylates.

Lorsqu'on envisage le produit final (c'est-à-dire le papier couché), l'homme du métier est particulièrement sensible à l'obtention d'un troisième type de propriétés : les caractéristiques optiques de la feuille de papier couchée, telles que notamment sa brillance et son azuration optique (c'est-à-dire sa blancheur). On met alors en oeuvre des activateurs de brillance tels que des polymères acryliques et la combinaison d'azurants optiques (substances fluorescentes à base de molécules stylbéniques) avec des supports d'azuration tels que des polymères acryliques, de l'alcool polyvinylique ou des polymères à base de carboxyméthylcellulose.

De manière habituelle, l'ensemble des additifs susmentionnés (épaississants, agents rétenteurs d'eau, activateurs de brillance, activateurs d'azuration optique) ainsi que les charges minérales, l'eau et les liants qui constituent la sauce de couchage, sont mélangés et homogénéisés sous forte agitation dans un réacteur. Cet état de la technique révèle un procédé complexe et coûteux, de part le nombre d'additifs à mettre en oeuvre pour optimiser les propriétés rhéologiques de la sauce (épaississement et rétention d'eau) et les propriétés optiques du papier couché (brillance et activation de l'azuration), et de part l'énergie employée pour mélanger ces constituants et obtenir une sauce de couchage homogène.

En vue de pallier à ces inconvénients, la Demanderesse a mis au point un nouveau procédé de fabrication d'une formulation aqueuse, caractérisé en ce qu'il comprend les étapes de :
a) préparer une solution aqueuse d'au moins un polymère peigne 1) de l'acide (méth)acrylique sur lequel est greffée une fonction alkoxy et / ou hydroxy polyalkylène glycol,
b) préparer une émulsion aqueuse d'au moins un épaississant acrylique 2),
c) mélanger la solution aqueuse de l'étape a) avec l'émulsion aqueuse de l'étape b), éventuellement en ajoutant de l'eau,
et en ce qu'on neutralise partiellement le polymère peigne au cours de l'étape a) et / ou de l'étape c), de manière à obtenir un mélange dont le pH est compris entre 5,5 et 6,8, préférentiellement entre 5,8 et 6,3. et dont la teneur en matière seche est comprise entre 20% et 35% de son poids total,

On dispose alors d'un produit unique, stable et manipulable, qui permet à la fois d'améliorer les propriétés rhéologiques de la sauce de couchage, et notamment d'augmenter sa rétention d'eau ainsi que sa viscosité Brookfield™ sur un large intervalle de valeurs, tout en améliorant les propriétés optiques du papier couché, et notamment sa brillance et son azuration optique.

La Demanderesse reconnaît que le polymère peigne a) est déjà connu comme étant un agent améliorant l'azuration optique de papiers couchés (comme décrit dans le document WO 2004 / 044022), ainsi que leur brillance (comme décrit dans le document WO 2004 / 041883), et qu'il est aussi connu comme agent améliorant la rétention d'eau des sauces de couchage (selon la demande de brevet française non encore publiée et déposée sous le numéro FR 05 12797). Toutefois, il ne permet pas d'atteindre des viscosités Brookfield™ élevées s'il est mis en oeuvre sans épaississant dans une sauce de couchage : c'est ce qu'indique le document déposé sous le numéro FR 05 12797 et ce que mentionne le document WO 2004 / 041883 qui démontre bien dans ses exemples la nécessité d'ajouter dans la sauce un agent épaississant qui est dans ce cas une carboxyméthyl cellulose.

Poursuivant ses recherches en vue de fournir un produit qui se comporte à la fois comme un épaississant et un agent rétenteur d'eau efficace de la sauce de couchage dans laquelle il est introduit, tout en conférant à la feuille de papier couchée par ladite sauce de très bonnes propriétés optiques (brillance, activation de l'azuration), la Demanderesse est parvenue à mettre au point un procédé de fabrication d'un tel produit. Ce procédé repose notamment sur le mélange d'eau avec une solution aqueuse d'un polymère peigne acrylique et une émulsion aqueuse d'un épaississant acrylique : de manière tout à fait surprenante, ce mélange d'une émulsion et d'une solution conduit à un produit stable d'une part et dont la viscosité le rend parfaitement manipulable par l'utilisateur d'autre part.

Dans la présente Demande, l'expression "solution aqueuse" désigne de manière générale le mélange homogène d'eau avec au moins une autre substance alors que l'expression "émulsion aqueuse" désigne le mélange stable entre l'eau et une autre substance non miscible avec l'eau.

De manière tout à fait surprenante, c'est la sélection du taux de neutralisation du polymère acrylique peigne a) qui a permis la mise au point d'un procédé permettant d'aboutir à un produit stable résultant pourtant du mélange d'une émulsion et d'une solution aqueuse ; or l'homme du métier sait bien que le mélange d'une émulsion et d'une solution aqueuse peut conduire à un produit fortement instable. De plus, c'est aussi cette sélection qui a permis d'obtenir un produit manipulable par l'utilisateur final, c'est-à-dire dont la viscosité Broolcfield™ à 100 tours / minute et à 25°C reste inférieure à 1 500 mPa.s. Ces propriétés sont clairement exemplifiées dans la présente Demande.

Or, rien de dévoilait ni ne suggérait dans l'état de la technique une telle sélection en vue de résoudre le problème technique objet de la présente Demande. Même les documents cités précédemment et qui se rapportent aux conditions de mise en oeuvre du polymère peigne acrylique a) dans le domaine du papier, ne suggèrent à l'homme du métier de le combiner sous forme de produit unique avec un épaississant acrylique. Ils ne l'incitent pas non plus à le neutraliser partiellement plutôt que de le mettre en oeuvre sous sa forme totalement neutralisée. A fortiori, ces documents ne suggèrent aucun taux de neutralisation particulier pour ledit polymère acrylique peigne a), en vue de résoudre le problème objet de la présente Demande.

Enfin, la mise au point du procédé selon l'invention a conduit de manière surprenante à un produit unique, au sein duquel les propriétés intrinsèques apportées par chacun de ses constituants sont conservées : augmentation de la viscosité grâce à l'épaississant b) et amélioration de la rétention d'eau, de la brillance et de l'activation de l'azurage optique grâce au polymère acrylique peigne a). D'une part, aucun des documents précités et relatif au polymère acrylique peigne a) ne divulguait que les propriétés optiques (brillance et azuration) et de rétention d'eau qu'il apporte puissent être maintenues si ledit polymère était neutralisé selon la présente invention. D'autre part, il est aussi remarquable de constater que les propriétés apportées par chacun des deux constituants sont maintenues lorsqu'ils sont mélangés : l'homme du métier sait bien qu'en matière de formulation, les interactions entre les constituants d'un même produit sont nombreuses, et peuvent masquer une ou plusieurs des propriétés apportées par un de ces constituants.

Aussi, un premier objet de l'invention est un procédé de fabrication d'une formulation aqueuse caractérisé en ce qu'il comprend les étapes de :
a) préparer une solution aqueuse d'au moins un polymère peigne 1) de l'acide (méth)acrylique sur lequel est greffée une fonction alkoxy et / ou hydroxy polyalkylène glycol,
b) préparer une émulsion aqueuse d'au moins un épaississant acrylique 2),
c) mélanger la solution aqueuse de l'étape a) avec l'émulsion aqueuse de l'étape b), éventuellement en ajoutant de l'eau,
et en ce qu'on neutralise partiellement le polymère peigne au cours de l'étape a) et / ou de l'étape c), de manière à obtenir un mélange dont le pH est compris entre 5,5 et 6,8, préférentiellement entre 5,8 et 6,3 et dont la teneur en matière sèche est comprise entre 20% et 35% de son poids total.

Ce procédé est aussi caractérisé en ce que la formulation résultant de l'étape c) présente une teneur en poids sec de polymère peigne 1) mis en oeuvre au cours de l'étape a) comprise entre 70 % et 95 %, préférentiellement entre 80 % et 90 % de sa matière sèche totale.

Ce procédé est aussi caractérisé en ce que le mélange résultant de l'étape c) présente une viscosité Brookfield™ mesurée à 25°C et à 100 tours par minute, inférieure à 1 500 mPa.s, préférentiellement 1 200 mPa.s, très préférentiellement 1 000 mPa.s.

Ce procédé est aussi caractérisé en ce que l'épaississant acrylique 2) mis en oeuvre au cours de l'étape b) est un épaississant acrylique du type ASE (émulsion alcali soluble) ou du type HASE (émulsion alcali soluble et modifiée hydrophobiquement).

Ce procédé est aussi caractérisé en ce que dans le polymère peigne 1) mis en oeuvre au cours de l'étape a), la fonction alkoxy et / ou hydroxy polyalkylène glycol est apportée par un monomère de formule (I): 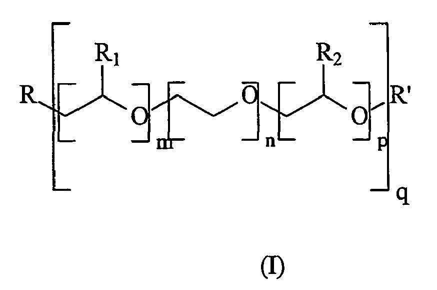 dans laquelle :
- m, n, p et q sont des entiers tels que : m, n, p ≤ 150, q≥ 1 et 5 ≤ (m+n+p)q≤150,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone.

Ce procédé est aussi caractérisé en ce que le polymère peigne 1) mis en oeuvre au cours de l'étape a) contient, en pourcentage en poids de chacun de ses constituants, la somme de ces pourcentages étant égale à 100 %, de 6 % à 40 %, préférentiellement de 6 % à 15 % d'acide (méth)acrylique, de 60 % à 94 %, préférentiellement de 85 % à 94 % d'un monomère de formule (I).

Ce procédé est enfin caractérisé en ce que le polymère peigne 1) mis en oeuvre au cours de l'étape a) est partiellement neutralisé par un ou plusieurs agents de neutralisation choisis préférentiellement parmi les hydroxydes de sodium et de potassium et leurs mélanges.

Un autre objet de l'invention est une formulation aqueuse, caractérisée en ce qu'elle contient :
1) au moins un polymère peigne de l'acide (méth)acrylique sur lequel est greffée une fonction alkoxy et / ou hydroxy polyallcylène glycol,
2) au moins un épaississant acrylique,
3) de l'eau, et en ce que le polymère peigne est partiellement neutralisé de manière à ce que le pH de ladite formulation est compris entre 5,5 et 6,8, préférentiellement entre 5,8 et 6,3 et dont la teneur en matière sèche est comprise entre 20% et 35% de son poids total.

Cette formulation est aussi caractérisée en ce qu'elle présente une teneur en poids sec de polymère peigne 1) comprise entre 70 % et 95 %, préférentiellement entre 80 % et 90 % de sa matière sèche totale.

Cette formulation est aussi caractérisée en ce qu'elle présente une viscosité Brookfield™ mesurée à 25°C et à 100 tours par minute, inférieure à 1 500 mPa.s, préférentiellement 1 200 mPa.s, très préférentiellement 1 000 mPa.s.

Cette formulation est aussi caractérisée en ce que l'épaississant acrylique 2) est un épaississant acrylique du type ASE (émulsion alcali soluble) ou du type HASE (émulsion alcali soluble et modifiée hydrophobiquement).

Cette formulation est aussi caractérisée en ce que dans le polymère peigne 1), la fonction alkoxy et / ou hydroxy polyalkylène glycol est apportée par un monomère de formule (I): 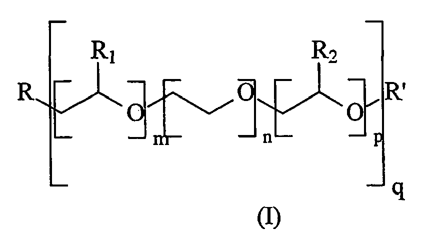 dans laquelle :
- m, n, p et q sont des entiers tels que : m, n, p≤ 150, q≥ 1 et 5 ≤ (m+n+p)q ≤ 150,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone.

Cette formulation est aussi caractérisée en ce que le polymère peigne 1) contient, en pourcentage en poids de chacun de ses constituants, la somme de ces pourcentages étant égale à 100 %, de 6 % à 40 %, préférentiellement de 6 % à 15 % d'acide (méth)acrylique, de 60 % à 94 %, préférentiellement de 85 % à 94 % d'un monomère de formule (I).

Cette formulation est aussi caractérisée en ce que le polymère peigne 1) est partiellement neutralisé par un ou plusieurs agents de neutralisation choisis préférentiellement parmi les hydroxydes de sodium et de potassium et leurs mélanges.

Un autre objet de l'invention est l'utilisation de la formulation aqueuse objet de la présente invention, dans une sauce de couchage papetière, comme agent épaississant de ladite sauce et / ou comme agent rétenteur d'eau de ladite sauce et / ou comme agent améliorant la brillance et / ou l'azuration optique du papier couché à partir de ladite sauce.

Les exemples qui suivent permettent de mieux apprécier la présente invention, sans toutefois en limiter la portée.

### EXEMPLES

Dans tous les exemples, le poids moléculaire des polymères mis en oeuvre est déterminé selon la méthode explicitée ci-dessous, par chromatographie d'exclusion stérique à multi-détection (CES 3D).

La chaîne de CES 3D est composée comme suit :
- dégazeur en ligne pour phase mobile ERC 3112,
- pompe isocratique de type Waters 515 ou Viscotek VE1121,
- injecteur automatique Waters 717+,
- four pour colonnes Waters CHM,
- jeu de 3 colonnes Waters Ultrahydrogel de longueur 30 cm et diamètre interne 7,8 mm 1 colonne linéaire suivie de 2 colonnes 120 Å, l'ensemble étant précédé par une colonne de garde de même nature,
- ensemble de détecteurs connectés en parallèle : Viscotek T60A combinant LS et viscosimétrie et réfractomètre différentiel Waters 2410,
- système informatique et logiciel : Viscotek TriSEC 3.0 GPC software.

Composition de la phase mobile :
- préparation d'une solution mère : Na₂SO₄ 666 mM, filtrée à 0,1 µm,
- préparation de la phase mobile à 66,6 mM en Na₂SO₄ (soit une force ionique de 0,2 M),
- 10 % en volume de la solution mère précédente,
- 5 % en volume d'acétonitrile,
- 85 % en volume d'eau à 18,2 MΩ,
- pH ajusté à 9,0 par quelques gouttes de soude N.

Paramètres opérationnels :
- débit : 0,8 ml/min,
- température des colonnes et du réfractomètre : 40°C,
- volume d'injection : 100 µl,
- concentration en polymère à l'injection : 2 à 4 mg/ml en fonction de la masse molaire moyenne attendue pour chaque échantillon (optimisation des réponses des détecteurs),
- durée d'analyse : 50 min.

Etalonnage des détecteurs :
Utilisation de deux étalons certifiés :

- Viscotek PEO22k, étalon de faible indice de polymolécularité (Ip) pour étalonnage proprement dit du système,
- Viscotek Dextran T70k, étalon de fort indice (Ip) pour vérification et affinage de l'étalonnage.

### Exemple 1

Cet exemple a pour objet d'illustrer le procédé selon l'invention, et notamment l'influence de la neutralisation partielle du polymère acrylique peigne a), sur la stabilité et la viscosité du mélange obtenu selon ledit procédé.

Cet exemple illustre aussi la formulation aqueuse selon l'invention.

Pour chacun des essais n° 1 à 10, on fabrique une formulation aqueuse à travers les étapes de :
a) préparer une solution aqueuse d'au moins un polymère peigne de l'acide (méth)acrylique sur lequel est greffée une fonction alkoxy et / ou hydroxy polyalkylène glycol,
b) préparer une émulsion aqueuse d'au moins un épaississant acrylique qui est un copolymère de l'acide (méthacrylique) avec au moins un autre monomère,
c) mélanger la solution aqueuse de l'étape a) avec l'émulsion aqueuse de l'étape b), éventuellement en ajoutant de l'eau, et on neutralise partiellement le polymère peigne au cours de l'étape a), grâce à la soude (cas des essais n° 1 à 20) ou à la potasse (cas des essais n° 27 à 34), de manière à obtenir une valeur donnée de pH pour le mélange final.

Le polymère peigne de l'étape a) est constitué (exprimé en % en poids de chaque monomère) de 6 % d'acide acrylique, 1,8 % d'acide méthacrylique, 92,2 % d'un monomère de formule (I) dans laquelle R₁ et R₂ représentent l'hydrogène, R représente le groupe méthacrylate, R' représente le radical méthyle, et avec (m+n+p)q = 113. Son poids moléculaire est égal à 1 850 000 g/mole.

L'épaississant de l'étape b) est un épaississant acrylique de type ASE commercialisé par la société COATEX™ sous le nom de Rheocoat™ 35.

Pour les essais n° 1 à 10, le mélange est constitué de 22,5 % en poids sec du polymère acrylique peigne a), 2,5 % en poids sec de Rheocoat™ 35 et 75 % d'eau. Pour les essais n° 11 à 20, le mélange est constitué de 20 % en poids sec du polymère acrylique peigne a), 5 % en poids sec de Rheocoat ™ 35 et 75 % d'eau.

Pour chacun des essais n° 1 à 34, on a relevé dans les tableaux 1 à 4 la valeur du pH du mélange, on a observé sa stabilité sur une durée de 8 jours, et on a mesuré sa viscosité Brookfield™ à 25°C et à 100 tours / minute (µ₁₀₀ en mPa.s).

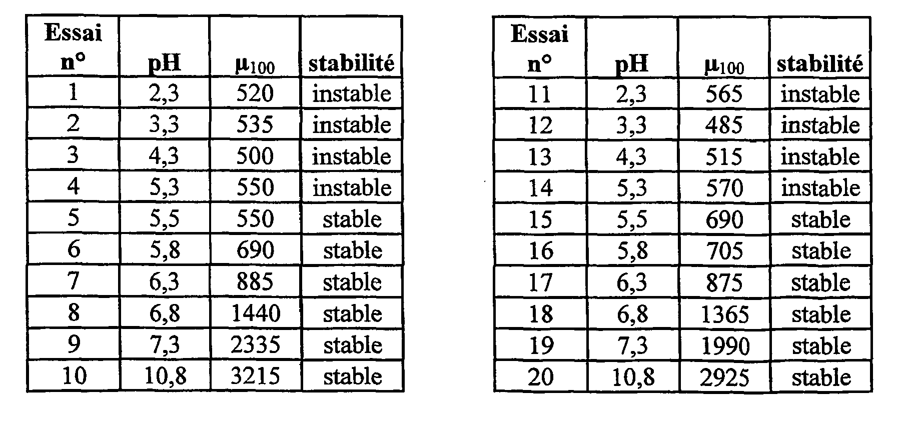

**Tableaux 1 et 2 :** neutralisation à la soude du polymère peigne a) - cas d'un mélange contenant 22,5 % et 2,5 % en poids sec respectivement de polymère peigne a) et de Rheocoat™ 35 b), et d'un mélange contenant 20 % et 5 % en poids sec respectivement de polymère peigne a) et de Rheocoat™ 35 b).

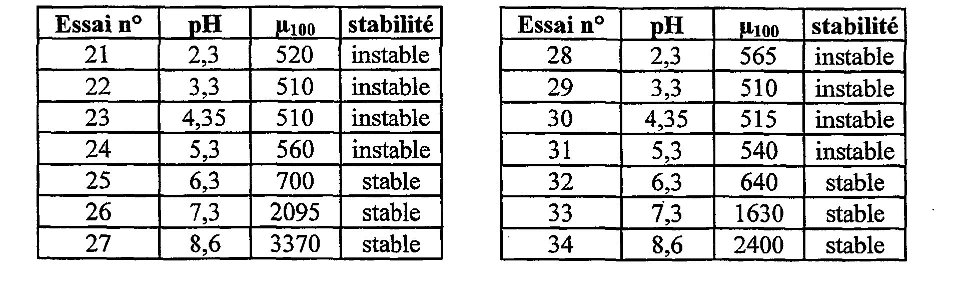

**Tableaux 3 et 4 :** neutralisation à la potasse du polymère peigne a) - cas d'un mélange contenant 22,5 % et 2,5 % en poids sec respectivement de polymère peigne a) et de Rheocoat™ 35 b), et d'un mélange contenant 20 % et 5 % en poids sec respectivement de polymère peigne a) et de Rheocoat™ 35 b).

Ces résultats démontrent bien l'influence du taux de neutralisation du polymère peigne a), en ce sens que le pH du mélange final résultant de la neutralisation du polymère peigne doit être compris entre 5,5 et 6,8, pour obtenir un produit à la fois stable et dont la viscosité Brookfield™ est inférieure à 1500 mPa.s à 25°C et à 100 tours / minute.

### Exemple 2

Cet exemple illustre le procédé selon l'invention, la formulation aqueuse ainsi obtenue, et sa mise en oeuvre dans une sauce de couchage papetière, en vue d'améliorer notamment sa rétention d'eau, sa viscosité Brookfield™, de même que les propriétés optiques de la feuille de papier couchée à partir de cette sauce et notamment sa brillance et sa blancheur.

### Formulations aqueuses selon l'invention

Pour chacun des essais n° 35 à 65, on commence par fabriquer une formulation aqueuse à travers les étapes de :
a) préparer une solution aqueuse d'au moins un polymère peigne de l'acide (méth)acrylique sur lequel est greffée une fonction alkoxy et / ou hydroxy polyalkylène glycol,
b) préparer une émulsion aqueuse d'au moins un épaississant acrylique qui est un copolymère de l'acide (méthacrylique) avec au moins un autre monomère,
c) mélanger la solution aqueuse de l'étape a) avec l'émulsion aqueuse de l'étape b), éventuellement en ajoutant de l'eau.

Le polymère peigne acrylique est neutralisé, soit au niveau de l'étape a), soit au niveau de l'étape c), de manière à ce que le pH du mélange soit compris entre 5,5 et 6,5.

Pour chacune de ces formulations aqueuses, on a mesuré son pH, sa viscosité Brookfield™ à 100 tours / minute à 25°C et sa stabilité pendant 8 jours.

### Sauces de couchage

Pour chacun de ces essais, on réalise une sauce de couchage constituée de :
- 100 parts en poids de carbonate de calcium commercialisé par la société OMYA™ sous le nom de Setacarb™ HG,
- 0,45 % en poids sec (par rapport au poids sec de carbonate de calcium) de la formulation aqueuse à tester, selon l'art antérieur ou selon l'invention,
- 10,5 % en poids sec (par rapport au poids sec de carbonate de calcium) d'un latex styrène-butadiène commercialisé par la société DOW™ CHEMICALS sous le nom de DL 966,
- 0,25 % en poids sec (par rapport au poids sec de carbonate de calcium) d'alcool polyvinylique commercialisé par la société CLARIANT™ sous le nom de Mowiol™ 4-98,
- 0,06 % en poids sec (par rapport au poids sec de carbonate de calcium) d'un azurant optique commercialisé par la société BAYER™ sous le nom de Blancophor™ P,

L'extrait sec de ladite sauce est fixé à 69 % de son poids total.

Pour chaque sauce, on détermine :
- sa viscosité Brooldeld™ à 10 et à 100 tours / minute à 25°C,
- sa viscosité ACAV sous un gradient de cisaillement égal à 10 s⁻¹ et à 25°C,
- sa rétention d'eau, avec un appareil du type AAGWR commercialisé par la société GRADEK™, selon la méthode décrite dans la Demande de Brevet française n° 05 12797 déjà citée dans le présent document.

### Papier couché

Chacune des sauces de couchage a servi à coucher un papier ayant un grammage de 78 g/m². Le couchage a été réalisé au moyen d'une coucheuse pilote à lame raclante, ayant permis de déposer sur le papier support un poids de sauce de couchage égal à 12± 1 g/m². Le papier couché obtenu a ensuite été calandré par 3 passages en pression à 80°C et à 40 bars. On a alors déterminé :
- la brillance TAPPI 75° selon la norme TAPPI T480 OS-78,
- la blancheur W(CIE) selon la norme ISO / FDIS 11475, cette blancheur étant représentative du degré d'azuration optique du papier couché,

### Essais

Dans la suite des essais, on appelle :
*Polymère A1* un polymère acrylique peigne constitué (en % en poids de chaque monomère) de 6 % d'acide acrylique, 1,8 % d'acide méthacrylique, 92,2 % d'un monomère de formule (I) dans laquelle R₁ et R₂ représentent l'hydrogène, R représente le groupe méthacrylate, R' représente le radical méthyle, et avec (m+n+p)q = 113. Son poids moléculaire est égal à 250 000 g/mole.
*Polymère A2* un polymère acrylique peigne constitué (en % en poids de chaque monomère) de 15,0 % d'acide acrylique, 5,0 % d'acide méthacrylique, 80,0 % d'un monomère de formule (I) dans laquelle R₁ et R₂ représentent l'hydrogène, R représente le groupe méthacrylate, R' représente le radical méthyle, et avec (m+n+p)q = 113. Son poids moléculaire est égal à 970 000 g/mole.
*Polynzère A3* un polymère acrylique peigne constitué (en % en poids de chaque monomère) de 6 % d'acide acrylique, 1,8 % d'acide méthacrylique, 92,2 % d'un monomère de formule (I) dans laquelle R₁ et R₂ représentent l'hydrogène, R représente le groupe méthacrylate, R' représente le radical méthyle, et avec (m+n+p)q = 45. Son poids moléculaire est égal à 1 250 000 g/mole.
*Polymère A4* un polymère acrylique peigne constitué (en % en poids de chaque monomère) de 6 % d'acide acrylique, 1,8 % d'acide méthacrylique, 92,2 % d'un monomère de formule (I) dans laquelle R₁ et R₂ représentent l'hydrogène, R représente le groupe méthacrylate, R' représente le radical méthyle, et avec (m+n+p)q = 17. Son poids moléculaire est égal à 1 020 000 g/mole.
*Polymère A5* un polymère acrylique peigne constitué (en % en poids de chaque monomère) de 30,0 % d'acide acrylique, 5,0 % d'acide méthacrylique, 65,0 % d'un monomère de formule (I) dans laquelle R₁ et R₂ représentent l'hydrogène, R représente le groupe méthacrylate, R' représente le radical méthyle, et avec (m+n+p)q =113. Son poids moléculaire est égal à 1850 000 g/mole.
*Epaississant B1* un épaississant acrylique de type HASE commercialisé par la société COATEX™ sous le nom de Rheocoat™ 73.
*Epaississant B2* un épaississant acrylique de type ASE commercialisé par la société COATEX™ sous le nom de Rheocoat™ 35.
*Epaississant B3* un épaississant acrylique de type HASE commercialisé par la société COATEX™ sous le nom de Rheo™ 3800.
*Epaississant B4* un épaississant acrylique de type ASE commercialisé par la société COATEX™ sous le nom de Rheocoat™ 12.
*Epaississant B5* un épaississant acrylique de type HASE et commercialisé par la société COATEX™ sous le nom de Rheo™ 3000.
CMC une carboxyméthyl cellulose commercialisée par la société BASF™ sous le nom de Finnfix™ 10.

### Essais n° 35 à 41

Ces essais mettent en oeuvre dans la sauce de couchage 0,45 % en poids sec (par rapport au poids sec de carbonate de calcium) :
- du polymère A1 totalement neutralisé par la soude (essai n° 35 selon l'art antérieur),
- d'une formulation qui est un mélange d'eau, d'un épaississant B1, B2 ou B3 et du polymère A1, partiellement neutralisé par la soude au niveau de l'étape a) du procédé de l'invention (essais n° 36 à 41 selon l'invention).

Les résultats relatifs à ces essais figurent dans le tableau 5.

| **Art Antérieur** / **Invention** | | **Art Antérieur** | **Invention** | | | | | |
|---|---|---|---|---|---|---|---|---|
| **Essai n°** | | **35** | **36** | **37** | **38** | **39** | **40** | **41** |
| Formulation testée | Composition | A1 | A1/B1/eau (22,5/2,5/75) | A1/B1/eau (20/5/75) | A1B2/eau (22,5/2,5/75) | A1/B2/eau (20/5/75) | A1B3/eau (22,5/2,5/75) | A1/B3/eau (20/5/75) |
| | pH | 7,15 | 6,25 | 5,94 | 6,17 | 5,95 | 6,12 | 5,93 |
| | stabilité | - | stable | stable | stable | stable | stable | Stable |
| | µ100 (mPa.s) | 190 | 710 | 510 | 430 | 330 | 520 | 400 |
| Sauce de couchage | µ10 (mPa.s) | 1200 | 9820 | 16040 | 6620 | 10100 | 11960 | 16000 |
| | µ100 (mPa.s) | 510 | 1810 | 2675 | 1135 | 1790 | 2195 | 2765 |
| | ACAV 10⁶ s⁻¹ (mPa.s) | 180 | 185 | 230 | 191 | 192 | 208 | 204 |
| | rétention (g/m2) | 128 | 62 | 57 | 64 | 54 | 60 | 56 |
| Papier couché | W(CIE) | 109 | 109 | 109 | 109 | 109 | 109 | 109 |
| | Brillance TAPPI75 | 76 | 76 | 76 | 76 | 76 | 76 | 76 |

### Essais n° 42 à 48

Ces essais mettent en oeuvre dans la sauce de couchage 0,45 % en poids sec (par rapport au poids sec de carbonate de calcium) :
- du polymère A2 totalement neutralisé par la soude (essai n° 42 selon l'art antérieur),
- d'une formulation qui est un mélange d'eau, d'un épaississant B1, B2 ou B3 et du polymère A2, partiellement neutralisé par la soude au niveau de l'étape c) du procédé de l'invention (essais n° 43 à 48 selon l'invention).

Les résultats relatifs à ces essais figurent dans le tableau 6.

| **Art Antérieur** / **Invention** | | **Art Antérieur** | **Invention** | | | | | |
|---|---|---|---|---|---|---|---|---|
| **Essai n°** | | **42** | **43** | **44** | **45** | **46** | **47** | **48** |
| Formulation testée | Composition | A2 | A2/B1/eau (22,5/2,5/75) | A2/B1/eau (20/5/75) | A2/B2/eau (22,5/2,5/75) | A2B2/eau (20/5/75) | A2/B3/eau (22,5/2,5/75) | A2B3/eau (20/5/75) |
| | pH | 7,05 | 6,17 | 5,95 | 6,03 | 5,90 | 6,07 | 5,93 |
| | stabilité | - | stable | stable | stable | stable | stable | Stable |
| | µ100 (mPa.s) | 310 | 1000 | 790 | 670 | 510 | 710 | 590 |
| Sauce de couchage | µ10 (mPa.s) | 8200 | 15160 | 18800 | 14680 | 19040 | 12400 | 18200 |
| | µ100 (mPa.s) | 670 | 2615 | 2990 | 2430 | 2945 | 2330 | 3035 |
| | ACAV 10⁶ S⁻¹ (mPa.s) | 190 | 203 | 213 | 196 | 199 | 192 | 196 |
| | rétention (g/m2) | 107 | 57 | 54 | 59 | 57 | 60 | 56 |
| Papier couché | W(CIE) | 108 | 108 | 109 | 108 | 109 | 109 | 108 |
| | Brillance TAPPI75 | 73 | 75 | 76 | 74 | 73 | 74 | 75 |

### Essais n° 49 à 53

Ces essais mettent en oeuvre dans la sauce de couchage 0,45 % en poids sec (par rapport au poids sec de carbonate de calcium) :
- du polymère A3 totalement neutralisé par la soude (essai ° 49 selon l'art antérieur),
- d'une formulation qui est un mélange d'eau, d'un épaississant B4, ou B5 et du polymère A3, partiellement neutralisé par la soude au niveau de l'étape a) du procédé de l'invention (essais n° 50 à 53 selon l'invention).

Les résultats relatifs à ces essais figurent dans le tableau 7.

| **Art Antérieur** / **Invention** | | **Art Antérieur** | **Invention** | | | |
|---|---|---|---|---|---|---|
| **Essai n°** | | **49** | **50** | **51** | **52** | **53** |
| Formulation testée | Composition | A3 | A3/B4/eau (22,5/2,5/75) | A3B4/eau (20/5/75) | A3/B5/eau (22,5/2,5/75) | A3/B5/eau (20/5/75) |
| | pH | 7,05 | 6,81 | 6,52 | 6,27 | 6,04 |
| | stabilité | - | stable | stable | stable | stable |
| | µ100 (mPa.s) | 520 | 980 | 970 | 1000 | 890 |
| Sauce de couchage | µ10 (mPa.s) | 3250 | 7140 | 6460 | 7160 | 9240 |
| | µ100 (mPa.s) | 500 | 950 | 850 | 1440 | 1700 |
| | ACAV 10⁶ s⁻¹ (mPa.s) | 180 | 194 | 192 | 194 | 198 |
| | rétention (g/m2) | 107 | 88 | 84 | 77 | 75 |
| Papier couché | W(CIE) | 108 | 108 | 108 | 108 | 108 |
| | Brillance TAPPI75 | 74 | 79 | 79 | 78 | 77 |

### Essais n° 54 à 58

Ces essais mettent en oeuvre dans la sauce de couchage 0,45 % en poids sec (par rapport au poids sec de carbonate de calcium) :
- du polymère A4 totalement neutralisé par la soude (essai n° 54 selon l'art antérieur),
- d'une formulation qui est un mélange d'eau, d'un épaississant B4, ou B5 et du polymère A4, partiellement neutralisé par la soude au niveau de l'étape a) du procédé de l'invention (essais n° 55 à 58 selon l'invention).

Les résultats relatifs à ces essais figurent dans le tableau 8.

**Table 8**

| **Art Antérieur / Invention** | | **Art Antérieur** | **Invention** | | | |
|---|---|---|---|---|---|---|
| **Essai n°** | | **54** | **55** | **56** | **57** | **58** |
| Formulation testée | composition | A4 | A4/B4/eau (22,5/2,5/75) | A4B4/eau (20/5/75) | A4B5/eau (22,5/5/75) | A4/B5/eau (20/5/75) |
| | pH | 7,05 | 6,81 | 6,52 | 6,27 | 6,04 |
| | stabilité | - | stable | stable | stable | stable |
| | µl100 (mPa.s) | 320 | 1080 | 1120 | 1200 | 1090 |
| Sauce de couchage | µ10 (mPa.s) | 7050 | 7940 | 8460 | 8260 | 10020 |
| | µ100 (mPa.s) | 600 | 1150 | 1210 | 1780 | 1980 |
| | ACAV 10⁶ s⁻¹ (mPa.s) | 190 | 212 | 223 | 225 | 224 |
| | rétention (g/m2) | 106 | 72 | 71 | 73 | 70 |
| Papier couché | W(CIE) | 108 | 108 | 108 | 108 | 108 |
| | Brillance TAPPI75 | 74 | 75 | 75 | 74 | 76 |

Pour chacun des groupes d'essais énumérés ci-dessus, c'est-à-dire pour chacun des tableaux n° 5 à 8, on constate que :
- toutes les formulations aqueuses selon l'invention possèdent un pH compris entre 5,5 et 6,5 ; elles sont stables, et possèdent une viscosité Brookfield™ à 25°C et à 100 tours / minute inférieure à 1 500 mPa.s, et dans certains cas bien inférieures à 1 000 mPa.s,
- les sauces de couchage réalisées selon l'invention sont plus épaissies que celles de l'art antérieur : elles possèdent des viscosités à bas gradient de cisaillement (Brookfield™ à 25°C, à 10 et 100 tours / minute) et à très haut gradient de cisaillement (ACAV) supérieures à celles mesurées pour l'art antérieur,
- les papiers couchés selon l'invention possèdent une blancheur et une brillance au moins égales à celles obtenues dans le cas du papier couché selon l'art antérieur.

En conclusion, les formulations selon l'invention permettent d'épaissir une sauce de couchage sur de larges intervalles de valeurs de viscosité, aussi bien à bas qu'à haut gradient de cisaillement.

Ces formulations confèrent à la fois une rétention d'eau aux sauces de couchage, ainsi qu'une activation de la brillance et de l'azuration optique aux papiers couchés à partir desdites sauces, au moins égales à celles obtenues avec les produits de l'art antérieur.

### Essais n° 59 à 63

Pour chacun de ces essais, on met en oeuvre une quantité de produit à tester (selon l'invention ou l'art antérieur) ajustée par l'homme du métier de telle manière à obtenir une viscosité Brookfield™ (100 / tours par minute, et à 25°C) égale à 2 000 ± 100 mPa.s.

Ces essais mettent en oeuvre :
- la CMC, le polymère A3, les épaississants B1 et B2 pour l'art antérieur (essais n° 59 à 62),
- et une formulation qui est un mélange d'eau, de l'épaississant B2 et du polymère A3, partiellement neutralisé par la soude au niveau de l'étape a) du procédé de l'invention (essai n° 63) ; ce dernier mélange est stable et possède une viscosité Brookfield™ à 25°C et à 100 tours / minute égale à 780 mPa.s.

Les résultats relatifs à ces essais figurent dans le tableau 9 ci-dessous :

**Tableau 9**

| **Art Antérieur** / **Invention** | | **Art Antérieur** | | | | **Invention** |
|---|---|---|---|---|---|---|
| **Essai n°** | | **59** | **60** | **61** | **62** | **63** |
| Formulation testée | composition | CMC | A3 | B1 | B2 | A3/B2/eau (20/5/75) |
| Sauce de couchage | rétention (g/m2) | 120 | 75 | 110 | 80 | 57 |
| Papier couché | W(CIE) | 108 | 109 | 105 | 105 | 109 |
| | Brillance TAPPI75 | 71 | 77 | 70 | 72 | 77 |

On constate que parmi tous les produits testés, c'est la formulation selon l'invention qui permet d'obtenir les meilleurs résultats en matière de rétention d'eau, de brillance et d'azuration optique.

## Revendications

1. - Procédé de fabrication d'une formulation aqueuse comprenant les étapes de ;
a) préparer une solution aqueuse d'au moins un polymère peigne 1) de l'acide (méth)acrylique sur lequel est greffée une fonction alkoxy et / ou hydroxy polyalkylène glycol,
b) préparer une émulsion aqueuse d'au moins un épaississant acrylique 2),
c) mélanger la solution aqueuse de l'étape a) avec l'émulsion aqueuse de l'étape b), éventuellement en ajoutant de l'eau,
- on neutralise partiellement le polymère peigne au cours de l'étape a) et / ou de l'étape c), de manière à obtenir un mélange dont le pH est compris entre 5,5 et 6,8, préférentiellement entre 5,8 et 6,3,
**caractérisé en ce que** la formulation résultant de l'étape c) présente une teneur en matière sèche comprise entre 20 % et 35 % de son poids total.

2. - Procédé selon la revendication 1, **caractérisée en ce que** la formulation résultant de l'étape c) présente une teneur en poids sec de polymère peigne 1) mis en oeuvre au cours de l'étape a) comprise entre 70 % et 95 %, préférentiellement entre 80 % et 90 % de sa matière sèche totale.

3. - Procédé selon l'une des revendications 1 ou 2, **caractérisé en ce que** le mélange résultant de l'étape c) présente une viscosité Brookfield™ mesurée à 25 °C et à 100 tours par minute, inférieure à 1500 mPa.s, préférentiellement 1200 mPa.s, très préférentiellement 1000 mPa.s.

4. - Procédé selon l'une des revendications 1 à 3, **caractérisé en ce que** l'épaississant acrylique 2) mis en oeuvre au cours de l'étape b) est un épaississant acylique du type ASE (émulsion alcali soluble) ou du type HASE (émulsion alcali soluble et modifiée hydrophobiquement).

5. - Procédé selon l'une des revendications 1 à 4, **caractérisé en ce que** dzlns le polymère peigne 1) mis en oeuvre au cours de l'étape a), la fonction alkoxy et / ou hydroxy polyalkylène glycol est apportée par un monomère de formule (I) : 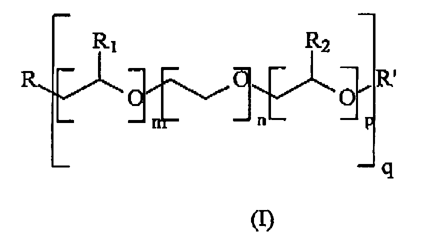 dans laquelle :
- m, n, p et q sont des entiers tels que : m, n, p≤ 150, q≥ 1 et 5≤ (m+n+p)q ≤ 150,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α- α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone.

6. - Procédé selon l'une des revendications 1 à 5, **caractérisé en ce que** le polymère peigne 1) mis en oeuvre au cours de l'étape a) contient, en pourcentage en poids de chacun de ses constituants, la somme de ces pourcentages étant égale à 100 %, de 6 % à 40 %, préférentiellement de 6 % à 15 % d'acide (méth)acrylique, de 60 % à 94 %, préférentiellement de 85 % à 94 % d'un monomère de formule (I).

7. - Procédé selon l'une des revendications 1 à 6, **caractérisé en ce que** le polymère peigne 1) mis en oeuvre au cours de l'étape a) est partiellement neutralisé par un ou plusieurs agents de neutralisation choisis préférentiellement parmi les hydroxydes de sodium et de potassium et leurs mélanges.

8. - Formulation aqueuse contenant ;
1) au moins un polymère peigne de l'acide (méth)acrylique sur lequel est greffée une fonction alkoxy et / ou hydroxy polyalkylène glycol,
2) au moins un épaississant acrylique,
3) de l'eau,
le polymère peigne étant partiellement neutralisé de manière à ce que le pH de ladite formulation soit compris entre 5,5 et 6,8, préférentiellement entre 5,8 et 6,3,
**caractérisée en ce qu'**elle présente une teneur en matière sèche comprise entre 20 % et 35 % de son poids total.

9. - Formulation aqueuse selon la revendication 8, **caractérisée en ce qu'**elle présente une teneur en poids sec de polymère peigne 1) comprise entre 70 % et 95 %, préférentiellement entre 80 % et 90 % de sa matière sèche totale.

10. - Formulation aqueuse selon l'une des revendications 8 ou 9, **caractérisée en ce qu'**elle présente une viscosité Brookfield™ mesurée à 25°C et à 100 tours par minute, inférieure à 1 500 mPa.s, préférentiellement 1 200 mPa.s, très préférentiellement 1000 mPa.s.

11. - Formulation aqueuse selon l'une des revendications 8 à 10, **caractérisée en ce que** l'épaississant acrylique 2) est un épaississant acrylique du type ASE (émulsion alcali soluble) ou du type HASE (émulsion alcali soluble et modifiée hydrophobiquement).

12. - Formulation aqueuse selon l'une des revendications 8 à 11, **caractérisée en ce que** dans le polymère peigne 1), la fonction alkoxy et / ou hydroxy polyalkylène glycol est apportée par un monomère de formule (I) : 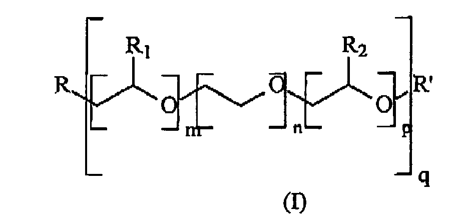 dans laquelle :
- m, n, p et q sont des entiers tels que : m, n, p ≤ 150, q ≥ 1 et 5 ≤ (m+n+p)q ≤ 150,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone.

13. - Formulation aqueuse selon l'une des revendications 8 à 12, **caractérisée en ce que** le polymère peigne 1) contient, en pourcentage en poids de chacun de ses constituants, la somme de ces pourcentages étant égale à 100 %, de 6 % à 40 %, préférentiellement de 6 % à 15 % d'acide (méth)acrylique, de 60 % à 94 %, préférentiellement de 85 % à 94 % d'un monomère de formule (I).

14. - Formulation aqueuse selon l'une des revendications 8 à 13, **caractérisée en ce que** le polymère peigne 1) est partiellement neutralisé par un ou plusieurs agents de neutralisation choisis préférentiellement parmi les hydroxydes de sodium et de potassium et leurs mélanges.

15. - Utilisation de la formulation aqueuse selon l'une des revendications 8 à 14, dans une sauce de couchage papetière, comme agent épaississant de ladite sauce et / ou comme agent rétenteur d'eau de ladite sauce et / ou comme agent améliorant la brillance et / ou l'azuration optique du papier couché à partir de ladite sauce.

## Claims

1. - A method for manufacturing an aqueous formulation, comprising the steps of:
a) preparing an aqueous solution of at least one comb-branched polymer 1) of (meth)acrylic acid onto which is grafted an alkoxy- and/or hydroxy-polyalkylene glycol function,
b) preparing an aqueous emulsion of at least one acrylic thickener 2),
c) mixing the aqueous solution from step a) with the aqueous emulsion from step b), possibly adding water,
- one partially neutralizes the comb-branched polymer during step a) and/or step c), in such a way as to obtain a mixture whose pH is between 5.5 and 6.8, or preferably between 5.8 and 6.3,
**characterized in that** the formulation resulting from stage c) exhibits solids content of between 20% and 35% of its total weight.

2. - A method according to claim 1, **characterized in that** the formulation resulting from step c) exhibits a solids content of comb-branched polymer 1) used during stage a) equal to between 70% and 95%, preferably between 80% and 90% of its total solids content.

3. - A method according to one of the claims 1 or 2, **characterized in that** the mixture resulting from stage c) exhibits a Brookfield^{™} viscosity measured at 25°C and at 100 revolutions per minute, that is less than 1 500 mPa.s, or preferably 1 200 mPa.s, or very preferably 1000 mPa.s.

4. - A method according to one of the claims 1 to 3, **characterized in that** the acrylic thickener 2) used in stage b) is an acrylic thickener of the ASE (alkali-soluble emulsion) or HASE (hydrophobically modified alkali-soluble emulsion) type.

5. - A method according to one of the claims 1 to 4, **characterized in that** within the comb-branched polymer 1) used during step a), the alkoxy- and/or hydroxy-polyalkylene glycol function is provided by a monomer with formula (I): 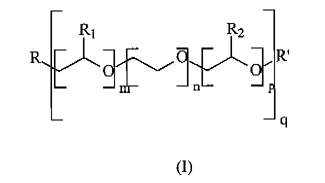 where:
- m, n, p and q are integers such as: m, n, p ≤ 150, q ≥1 and 5 ≤ (m+n+p)q ≤ 150,
- R₁ represents hydrogen or the methyl or ethyl radical,
- R₂ represents hydrogen or the methyl or ethyl radical,
- R represents a radical containing a polymerizable unsaturated function, preferably belonging to the group of vinylics as well as the group of acrylic, methacrylic, and maleic esters, as well as to the group of unsaturated urethanes such as acrylurethane, methacrylurethane, α-α' dimethyl-isopropenyl-benzylurethane, allylurethane, as well as to the group of allylic or vinylic ethers, whether substituted or not, or to the group of ethylenically unsaturated amides or imides,
- R' represents hydrogen or a hydrocarbonated radical having 1 to 40 carbon atoms, or an ionic or ionizable group such as a phosphate, a phosphonate, a sulfate, a sulfonate, a carboxylic, or also a primary, secondary or tertiary amine, or a quaternary ammonium, or a mixture thereof, and preferably represents a hydrocarbon radical having 1 to 12 carbon atoms and very preferably a hydrocarbon radical having 1 to 4 carbon atoms.

6. - A method according to one of the claims 1 to 5, **characterized in that** the comb-branched polymer 1) used during stage a) contains, as a percentage of weight of each of its constituents, the sum of the percentages being equal to 100%, from 6% to 40%, or preferably from 6% to 15% of (meth)acrylic acid, and from 60% to 94%, or preferably from 85% to 94% of a monomer with the formula (I).

7. - A method according to one of the claims 1 to 6, **characterized in that** the comb-branched polymer 1) used during stage a), is partially neutralized by one or more neutralization agents preferably chosen among the sodium and potassium hydroxides and mixtures thereof.

8. - An aqueous formulation containing:
1) at least one comb-branched polymer of (meth)acrylic acid onto which is grafted a function of alkoxy and/or hydroxy polyalkylene glycol,
2) at least one acrylic thickener,
3) water,
and in that the comb-branched polymer is partially neutralized in such a way that the pH of said formulation is between 5.5 and 6.8, or preferably between 5.8 and 6.3,
**characterized in that** it exhibits solids content of between 20% and 35% of its total weight.

9. - An aqueous formulation according to claim 8, **characterized in that** it presents a solids content of comb-branched polymer 1) from 70% to 95%, or preferably from 80% to 90% of its total solids content.

10. - An aqueous formulation according to one of the claims 8 or 9, **characterized in that** it exhibits a Brookfield™ viscosity measured at 25°C and at 100 revolutions per minute, that is less than 1500 mPa.s, or preferably 1 200 mPa.s, very preferably 1 000 mPa.s,

11. - An aqueous formulation according to one of the claims 8 to 10, **characterized in that** the acrylic thickener 2) is an acrylic thickener of the ASE (alkali-soluble emulsion) or HASE (hydrophobically modified alkali-soluble emulsion) type.

12. - An aqueous formulation according to one of the claims 8 to 11, **characterized in that** within the comb-branched polymer 1) the alkoxy- and/or hydroxy-polyalkylene glycol function is brought by a formula (I) monomer: 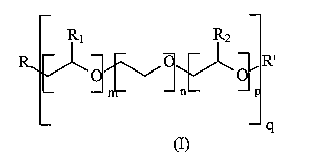 where:
- m, n, p and q are integers and m, n, p≤ 150, q ≥ 1 and 5 ≤ (m+n+p)q ≤ 150,
- R₁ represents hydrogen or the methyl or ethyl radical,
- R₂ represents hydrogen or the methyl or ethyl radical,
- R represents a radical containing a polymerizable unsaturated function, preferably belonging to the group of vinylics as well as the group of acrylic, methacrylic, and maleic esters, as well as to the group of unsaturated urethanes such as acrylurethane, methaerylurethane, α-α' dimethyl-isopropenyl-benzylurethane, allylurethane, as well as to the group of allylic or vinylic ethers, whether substituted or not, or to the group of ethylenically unsaturated amides or imides,
- R' represents hydrogen or a hydrocarbonated radical having I to 40 carbon atoms, or an ionic or ionizable group such as a phosphate, a phosphonate, a sulfate, a sulfonate, a carboxylic, or also a primary, secondary or tertiary amine, or a quaternary ammonium, or a mixture thereof, and preferably represents a hydrocarbon radical having 1 to 12 carbon atoms and very preferably a hydrocarbon radical having 1 to 4 carbon atoms.

13. - An aqueous formulation according to one of the claims 8 to 12, **characterized in that** the comb-branched polymer 1) contains, as a percentage of weight of each of its constituents, the sum of the percentages being equal to 100%, from 6% to 40%, or preferably from 6% to 15% of (meth)acrylic acid, from 60% to 94%, or preferably from 85% to 94% of a monomer with the formula (1).

14. - An aqueous formulation according to one of the claims 8 to 13, **characterized in that** the comb-branched polymer 1) is partially neutralized by one or more neutralization agents or preferably chosen among the sodium and potassium hydroxides and mixtures thereon.

15. - The utilization of the aqueous formulation according to one of the claims 8 to 14 in a paper coating, as a thickening agent for said coating and/or as a water retention agent for said coating and/or as an agent improving the optical whiteness and/or brightness of the paper coated with said coating.

## Patentansprüche

1. - Verfahren zur Herstellung einer wässrigen Formulicrung, die folgenden Schritte umfassend:
a) Zubereiten einer wässrigen Lösung mindestens eines Kammpolymers 1) der (Meth)acrylsäure, auf welches eine Alkoxy- und/oder Hydroxypolyalkylenglykol-Funktion aufgepfropft wird,
b) Vorbereiten einer wässrigen Emulsion mindestens eines Acrylverdickungsmittels 2),
c) Mischen der wässrigen Lösung von Schritt a) mit der wässrigen Emulsion von Schritt b), gegebenenfalls unter Beigeben von Wasser,
- wobei man das Kammpolymer während des Schritts a) und/oder des Schritts c) teilweise neutralisiert, um ein Gemisch zu erhalten, dessen pH-Wert zwischen 5,5 und 6,8, vorzugsweise zwischen 5,8 und 6,3 beträgt,
**dadurch gekennzeichnet, dass** die in Schritt c) entstandene Formulierung einen Trockensubstanzgehalt von zwischen 20 % und 35 % ihres Gesamtgewichts aufweist.

2. - Verfahren nach Anspruch 1, **dadurch gekennzeichnet, dass** die in Schritt c) entstandene Formulierung einen Trockengewichtsgehalt des in Schritt a) eingesetzten Karmnpolymers 1) von zwischen 70 % und 95 %, vorzugsweise zwischen 80 % und 90 %, ihrer Gesamtttockensubstanz aufweist.

3. - Verfahren nach einem der Ansprüche 1 oder 2, **dadurch gekennzeichnet, dass** das in Schritt c) entstandene Gemisch eine bei 25° C und 100 Umdrehungen pro Minute gemessene Brookfield™-Viskosität von unter 1500 mPa.s, vorzugsweise von 1200 mPa.s, sehr bevorzugterweise von 1000 mPa.s, aufweist.

4. - Verfahren nach einem der Ansprüche 1 bis 3, **dadurch gekennzeichnet, dass** das in Schritt b) eingesetzte Acrylverdickungsmittel 2) ein Acrylverdickungsmittel vom Typ ASE (lösliche Alkaliemulsion) oder vom Typ HASE (lösliche und hydrophob modifizierte Alkaliemulsion) ist.

5. - Verfahren nach einem der Ansprüche 1 bis 4, **dadurch gekennzeichnet, dass** die Alkoxy- und/oder Hydroxypolyalkylenglykol-Funktion in dem in Schritt a) eingesetzten Kanimpolymer 1) durch ein Monomer der Formel (I) erbracht wird: 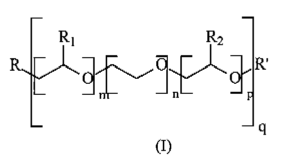 wobei:
- m, n, p und q ganze Zahlen wie: m, n, p≤ 150, q ≥ 1 und 5 ≤ (m+n+p)q ≤ 150 sind,
- R₁ den Wasserstoff oder das Methyl- oder Ethylradikal darstellt,
- R₂ den Wasserstoff oder das Methyl- oder Ethylradikal darstellt,
- R ein Radikal mit einer polymerisierbaren ungesättigten Funktion darstellt, welches vorzugsweise zur Gruppe der Vinyl und zur Gruppe der Acryl-, Methacryl-, Malein-Ester und zur Gruppe der ungesättigten Urethane wie Acrylurethan, Methacrylurethan, α-α'-Dimethyl-tsopropenyl-Benzylurethan, Allylurethan sowie zur Gruppe der substituierten oder nicht substituierten Allyl-oder Vinylether oder auch zur Gruppe der ethylenisch ungesättigten Amide oder Imide gehört,
- R' den Wasserstoff oder ein hydrocarbonisiertes Radikal mit 1 bis 40 Kohlenstoffatomen oder eine ionische oder ionisierbare Gruppe wie ein Phosphat, ein Phosphonat, ein Sulfat, eine Sulfonat, ein Carboxyl oder auch ein primäres, sekundäres oder tertiäres Amin, oder ein quartäres Ammonium, oder auch Mischungen daraus, darstellt, und vorzugsweise ein hydrobarbonisiertes Radikal mit 1 bis 12 Kohlenstoffatomen, und sehr bevorzugterweise ein hydrocarbynisiertes Radikal mit 1 bis 4 Kohlenstoffatomen, darstellt.

6. - Verfahren nach einem der Ansprüche 1 bis 5, **dadurch gekennzeichnet, dass** das in Schritt a) eingesetzte Kammpolymer 1) in Gewichtsprozent eines jeden seiner Bestandteile, wobei die Summe dieser Gewichtsprozente gleich 100 % ist, 6 % bis 40 %, vorzugsweise 6 % bis 15 %, (Meth)acrylsäure und 60 % bis 94 %, vorzugsweise 85 bis 94 % eines Monomers der Formel (I) enthält.

7. - Verfahren nach einem der Ansprüche 1 bis 6, **dadurch gekennzeichnet, dass** das in Schritt a) eingesetzte Kammpolymer 1) teilweise durch ein oder mehrere Neutralisierungsmittel, vorzugsweise gewählt unter den Natrium- und Kaliumhydroxiden und Mischungen daraus, neutralisiert wird.

8. - Wässrige Formulierung, enthaltend:
1) Mindestens ein Kammpolymer der (Meth)acrylsäure, auf welches eine Alkoxy-und/oder Hydroxypolyatkylenglykol-Funktion aufgepfropft wird,
2) mindestens ein Acrylverdickungsmittel,
3) Wasser,
wobei das Kammpolymer teilweise neutralisiert wird, so dass der pH-Wert der besagten Formulierung zwischen 5,5 und 6,8, vorzugsweise zwischen 5,8 und 6,3 beträgt,
**dadurch gekennzeichnet, dass** sie einen Trockensubstanzgehalt von zwischen 20 % und 35 % ihres Gesamtgewichts aufweist.

9. - Wässrige Formulierung nach Anspruch 8, **dadurch gekennzeichnet, dass** sie einen Trockengewichtsgehalt des Kamnnpolyrners 1) von zwischen 70 % und 95 %, vorzugsweise zwischen 80 % und 90 % ihrer Gesamttrockensubstanz aufweist.

10. - Wässrige Formulierung nach einem der Ansprüche 8 oder 9, **dadurch gekennzeichnet, dass** sie eine bei 25° C und 100 Umdrehungen pro Minute gemessene Brookfield™-Viskosität von unter 1500 mFa.s, vorzugsweise von 1200 mPa.s, sehr bevorzugterweise von 1000 mPa.s, aufweist.

11. - Wässrige Formulierung nach einem der Ansprüche 8 bis 10, **dadurch gekennzeichnet, dass** das Acrylverdickungsmittel 2) ein Acrylverdickungsmittel vom Typ ASE (lösliche Alkaliemulsion) oder vom Typ HASE (lösliche und hydrophob modifizierte Alkaliemulsion) ist.

12. - Wässrige Formulierung nach einem der Ansprüche 8 bis 11, **dadurch gekennzeichnet, dass** die Alkoxy- und/oder Hydroxypolyalkylenglykol-Funktion durch ein Monomer der Formel (I) erbracht wird: 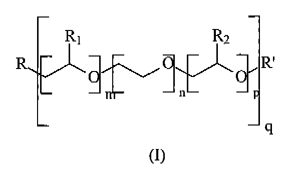 wobei:
- m, n, p und q ganze Zahlen wie: m, n, p≤150, q ≥ 1 und 5 ≤ (m+n+p)q ≤ 150 sind,
- R₁ den Wasserstoff oder das Methyl- oder Ethylradikal darstellt,
- R₂ den Wasserstoff oder das Methyl- oder Ethylradikal darstellt,
- R ein Radikal mit einer polymerisierbaren ungesättigten Funktion darstellt, welches vorzugsweise zur Gruppe der Vinyle und zur Gruppe der Acryl-, Methacryl-, Malein-Ester und zur Gruppe der ungesättigten Urethane wie Acrylurethan, Methacrylurethan, α-α'-Dimethyl-Isopropenyl-Benzylurethan, Allylurethan sowie zur Gruppe der substituierten oder nicht substituierten Allyl-oder Vinylether oder auch zur Gruppe der ethylenisch ungesättigten Amide oder Imide gehört,
- R' den Wasserstoff oder ein hydrocarbonisiertes Radikal mit 1 bis 40 Kohlenstoffatomen oder eine ionische oder ionisierbare Gruppe wie ein Phosphat, ein Phosphonat, ein Sulfat, eine Sulfonat, ein Carboxyl oder auch ein primäres, sekundäres oder terziäres Amin, oder ein quartäres Ammonium, oder auch Mischungen daraus, darstellt, und vorzugsweise ein hydrobarbonisiertes Radikal mit 1 bis 12 Kohlenstoffatomen, und sehr bevorzugterweise ein hydrocarbonisiertes Radikal mit 1 bis 4 Kohlenstoffatornen, darstellt.

13. - Wässrige Formulierung nach einem der Ansprüche 8 bis 12, **dadurch gekennzeichnet, dass** das Kammpolymer 1) in Gewichtsprozent eines jeden seiner Bestandteile, wobei die Summe dieser Gewichtsprozente gleich 100 % ist, 6 % bis 40 %, vorzugsweise 6 % bis 15 %, (Meth)acrylsäure und 60 % bis 94 %, vorzugsweise 85 bis 94 % eines Monomers der Formel (I) enthält.

14. - Wässrige Formulierung nach einem der Ansprüche 8 bis 13, **dadurch gekennzeichnet, dass** das Kammpolymer 1) teilweise durch ein oder mehrere Neutralisierungsmittel, vorzugsweise gewählt unter den Natriunt- und Kaliumhydroxiden und Mischungen daraus, neutralisiert wird.

15. - Verwendung der wässrigen Formulierung nach einem der Ansprüche 8 bis 14, in einer Papierstreichmasse, als Verdickungsmittel der besagten Streichmasse und/oder als Wasserretentionsmittel der besagten Streichmasse und/oder als Mittel zur Verbesserung des Glanzes und/oder der optischen Weißung des mit der Streichmasse beschichteten Papiers.
